# EUROPEAN PATENT SPECIFICATION

(11) **EP 4 006 592 B1**
(45) Date of publication and mention of the grant of the patent: **04.09.2024**
(21) Application number: 20847014.6
(22) Date of filing: 30.07.2020
(51) Int. Cl.: G02B 1/111, B32B 7/023, B32B 27/18, G02B 1/14, G02B 1/18, G02B 1/113

(54) **ANTI-REFLECTION FILM**
ANTIREFLEXIONSFOLIE
FILM ANTIREFLET

(30) Priority: 30.07.2019 JP 2019139801
(43) Date of publication of application: 01.06.2022
(73) Proprietor: Higashiyama Film Co., Ltd., Nagoya-shi, Aichi 450-0002 (JP)
(72) Inventor: MATSUMOTO, Hironobu, Gifu 509-6104 (JP)
(74) Representative: Horn Kleimann Waitzhofer Schmid-Dreyer Patent- und Rechtsanwälte PartG mbB
(86) International application number: PCT/JP2020/029214
(87) International publication number: WO 2021/020504

(56) References cited:
- WO-A1-2017/014243
- JP-A- 2004 125 958
- JP-A- 2006 117 924
- JP-A- 2007 322 877
- US-A1- 2006 204 718
- US-A1- 2012 162 774

## Description

### Technical Field

The present invention relates to an antireflection film, and more specifically relates to an antireflection film that can be suitably used for a display surface of a liquid crystal display, an organic EL display, a touch panel of a smartphone, or the like.

### Background Art

An antireflection film is sometimes disposed on a display surface of a liquid crystal display, an organic EL display, a touch panel of a smartphone, or the like to prevent external light from being reflected by the screen.

An antireflection film that includes a hard coat layer and a low-refractive layer on a substrate film is known (JP 2019-015954A). The antireflection film disclosed in JP 2019-015954A contains solid inorganic nanoparticles and hollow inorganic nanoparticles in the low-refractive layer. In the antireflection film disclosed in JP 2019-015954A, at least 70 vol% of all the solid inorganic nanoparticles is arranged within a distance of 50% of the entire thickness of the low-refractive layer from an interface between the hard coat layer and the low-refractive layer.

US 2012/162774 A1 discloses an antireflection member comprising an antireflection layer includes two adjacent layers with different refractive indices, the antireflection layer formed at least on a first surface of a support substrate, and one of the two adjacent layers with different refractive indices located farther from the support substrate is a first layer, and another of the two adjacent layers is a second layer, wherein the antireflection layer contains two or more kinds of particles of different constituent elements and one or more kinds of binders, and a ratio b/a is more than 1.10 and less than 1.45, where "a" denotes a length of the line segment A1A2 connecting two arbitrarily-selected points A1 and A2 located on an interface between said first layer and said second layer and apart from each other by a linear distance of 500 nm or more, and "b" denotes a length of a line formed by projecting the line segment A1A2 in a direction perpendicular to the first surface of the support substrate onto the interface between the first layer and the second layer.

JP 2004 125958 A discloses an anti-dazzle reflection preventive film having at least a single-layered anti-dazzle layer on which light transmissive micro particles are dispersed in a light transmissive binder matrix, and a low reflectance layer of which the refractive index is lower than its under layer on the transparent supporting body, and a polarizing plate using the anti-dazzle reflection preventive film characterized by having surface roughness Ra of 0.02-1.00pm and Rz/Ra of 30 or lower, and further, a liquid crystal display device are obtained.

US 2006/204718 A1 discloses an anti-glare film and a manufacturing method thereof, in which undesired image capturing caused by outside light and lowered contrast are effectively inhibited without lowering sharpness of a high quality image via miniaturization of a pixel size, and a desired micro-roughened structure is stably formed effectively with good productivity, and further to provide an anti-glaring anti-reflection film, a polarizing plate, and a display thereof. Disclosed is a manufacturing method of an anti-glare film possessing the step of forming a roughened structure eith ink adhesion portions and unfinished ink adhesion portions, provided on a substrate film surface via flexographic printing, employing a seamless resin plate having a diameter of 50-1000 mm and a rubber hardness degree of 30-80.

### Summary of Invention

### Technical Problem

The antireflection film disclosed in JP 2019-015954A has a low reflectance, which is 0.70% or less, in the visible light region, but when scratch resistance is evaluated using steel wool, the antireflection film can withstand scratching about 10 times under a load of 500 g, and has a problem in its scratch resistance.

A problem to be solved by the present invention is to provide an antireflection film that has a high antireflection property, excellent scratch resistance, and a favorable antifouling property.

### Solution to Problem

In order to solve the above problem, an antireflection film according to the present invention comprises the features of claim 1.

The inorganic oxide particles are preferably solid particles. The amount of the fluorine-containing compound contained in the low-refractive-index layer is preferably at least 1.0 mass% and no greater than 15.0 mass% relative to 100 mass% of the solid content of the low-refractive-index layer. The fluorine-containing compound and the binder resin preferably have reactive groups that are reactive to ultraviolet rays. A protective film may be provided over a surface of the low-refractive-index layer with an adhesive layer arranged therebetween. A transparent adhesive layer may be provided on a surface of the substrate film opposite to the surface thereof covered with the low-refractive-index layer.

### Advantageous Effects of Invention

The antireflection film according to the present invention includes the substrate film, the hard coat layer formed over a surface of the substrate film, and the low-refractive-index layer formed over a surface of the hard coat layer. The low-refractive-index layer contains the inorganic oxide particles that form raised portions in a surface of the low-refractive-index layer, the hollow silica particles having an average particle size smaller than the average thickness of the low-refractive-index layer, the fluorine-containing compound, and the binder resin. The amount of the inorganic oxide particles contained in the low-refractive-index layer is at least 0.1 mass% and no greater than 4.0 mass% relative to 100 mass% of the solid content of the low-refractive-index layer. The total amount of the inorganic oxide particles and the hollow silica particles contained in the low-refractive-index layer is at least 10 mass% and no greater than 50 mass% relative to 100 mass% of the solid content of the low-refractive-index layer. A difference (r-d) between the average particle size r of the inorganic oxide particles and the average thickness d of the low-refractive-index layer is at least 10 nm and no greater than 300 nm. Therefore, the antireflection film has a high antireflection property, excellent scratch resistance, and a favorable antifouling property.

If the inorganic oxide particles are solid particles, scratch resistance of the antireflection film is improved. If the amount of the fluorine-containing compound contained in the low-refractive-index layer is at least 1.0 mass% and no greater than 15.0 mass% relative to 100 mass% of the solid content of the low-refractive-index layer, the antireflection film has a particularly favorable antifouling property and a reduction in scratch resistance is suppressed. If the fluorine-containing compound and the binder resin have reactive groups that are reactive to ultraviolet rays, scratch resistance of the antireflection film is improved. If a protective film is provided over a surface of the low-refractive-index layer with an adhesive layer arranged therebetween, the low-refractive-index layer can be kept from being damaged when the antireflection film is handled, for example.

### Brief Description of Drawings

Fig. 1 is a cross-sectional view of an antireflection film according to a first embodiment of the present invention.
Fig. 2 is a cross-sectional view of an antireflection film according to a second embodiment of the present invention.
Fig. 3 is a cross-sectional view of an antireflection film according to a third embodiment of the present invention.
Fig. 4 is a cross-sectional view of an antireflection film according to a fourth embodiment of the present invention.

### Description of Embodiments

The following describes the present invention in detail.

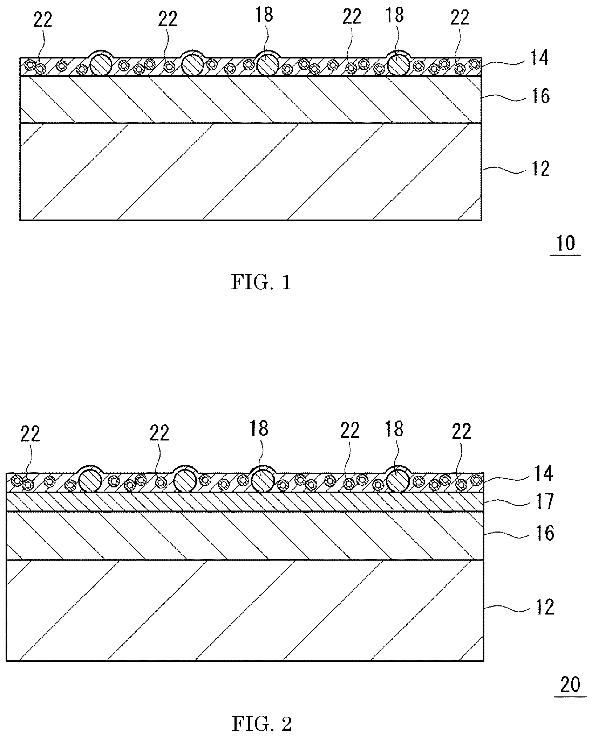

Fig. 1 is a cross-sectional view of an antireflection film according to a first embodiment of the present invention. As shown in Fig. 1, an antireflection film 10 according to the first embodiment of the present invention includes a substrate film 12, a hard coat layer 16 that is formed over a surface of the substrate film 12, and a low-refractive-index layer 14 that is formed over a surface of the hard coat layer 16. The antireflection film 10 includes the substrate film 12, the hard coat layer 16, and the low-refractive-index layer 14 layered in this order.

There is no particular limitation to the substrate film 12 so long as the substrate film 12 is transparent. Examples of the substrate film 12 include a transparent polymer film and a glass film. "Transparent" means that the total light transmittance in the visible light wavelength range is at least 50%, and the total light transmittance is more preferably at least 85%. The total light transmittance can be measured in accordance with JIS K7361-1 (1997). The thickness of the substrate film 12 is not particularly limited, but is preferably within a range of 2 to 500 pm from the standpoint of ease of handling and the like. The thickness is more preferably within a range of 2 to 200 pm. Note that the term "film" commonly refers to structures having a thickness less than 0.25 mm, but here the term also encompasses a film having a thickness of 0.25 mm or more as long as the film can be wound into a roll.

Examples of polymer materials of the substrate film 12 include polyester resins such as polyethylene terephthalate resin and polyethylene naphthalate resin, polycarbonate resin, poly(meth)acrylate resin, polystyrene resin, polyamide resin, polyimide resin, polyacrylonitrile resin, polyolefin resins such as polypropylene resin, polyethylene resin, polycycloolefin resin, and cycloolefin copolymer resin, cellulose-based resins such as triacetyl cellulose resin and diacetyl cellulose resin, polyphenylene sulfide resin, polyvinyl chloride resin, polyvinylidene chloride resin, and polyvinyl alcohol resin. The substrate film 12 may be constituted by any one of these polymer materials or a combination of two or more of these polymer materials. Among these, polyethylene terephthalate resin, polyimide resin, polycarbonate resin, poly(meth)acrylate resin, polycycloolefin resin, cycloolefin copolymer resin, and triacetyl cellulose resin are more preferable from the standpoint of optical properties and durability, for example.

The substrate film 12 may be constituted by a single layer that contains one or more of the above-listed polymer materials, or two or more layers that include a layer containing one or more of the above-listed polymer materials and a layer that contains one or more polymer materials different from those contained in the other layer, for example.

The hard coat layer 16 contributes to improvement of scratch resistance of the antireflection film 10. The hard coat layer 16 preferably has at least the pencil hardness H. The pencil hardness can be measured in accordance with JIS K5600-5-4. Known materials that are used as materials of a hard coat layer in a film such as an antireflection film provided on a display surface of a liquid crystal display or the like can be used for the hard coat layer 16. The hard coat layer 16 is preferably constituted by a material that is obtained by curing a curable composition that contains an ultraviolet curable resin from the standpoint of scratch resistance and productivity, for example.

Examples of ultraviolet curable resins include monomers, oligomers, and prepolymers that include reactive groups that are reactive to ultraviolet rays. Examples of reactive groups that are reactive to ultraviolet rays include radical polymerization type reactive groups including ethylenically unsaturated bonds, such as an acryloyl group, a methacryloyl group, an allyl group, and a vinyl group, and cationic polymerization type reactive groups such as an oxetanyl group. Among these, an acryloyl group, a methacryloyl group, and an oxetanyl group are more preferable, and an acryloyl group and a methacryloyl group are particularly preferable. That is, (meth)acrylates are particularly preferable. Note that in the present specification, "(meth)acrylate" refers to "at least one of acrylate and methacrylate". "(Meth)acryloyl" refers to "at least one of acryloyl and methacryloyl". "(Meth)acryl" refers to "at least one of acryl and methacryl".

Examples of (meth)acrylates include urethane (meth)acrylate, silicone (meth)acrylate, alkyl (meth)acrylate, and allyl (meth)acrylate. Among these, urethane (meth)acrylate is particularly preferable from the standpoint of good flexibility, for example. If the curable composition for forming the hard coat layer 16 contains urethane (meth)acrylate as the ultraviolet curable resin, the hard coat layer 16 has adequate flexibility, and accordingly, can be suitably used for flexible displays such as a foldable display and a rollable display that are repeatedly bent. Moreover, cracking of the substrate film 12 is likely to be suppressed even if the substrate film 12 is formed of polycycloolefin or a cycloolefin copolymer, for example, and is relatively liable to cracking.

The curable composition for forming the hard coat layer 16 may optionally contain a non-ultraviolet curable resin in addition to the ultraviolet curable resin. Also, the curable composition for forming the hard coat layer 16 may contain a photopolymerization initiator. Also, additives that are added to a curable composition may be contained as necessary. Examples of such additives include a dispersant, a leveling agent, an antifoaming agent, a thixotropic agent, an antifouling agent, an antibacterial agent, a flame retardant, a slipping agent, an antistatic agent, inorganic particles, and resin particles. Also, a solvent may be contained as necessary.

Examples of non-ultraviolet curable resins include thermoplastic resins and thermosetting resins. Examples of thermoplastic resins include polyester resin, polyether resin, polyolefin resin, and polyamide resin. Examples of thermosetting resins include unsaturated polyester resin, epoxy resin, alkyd resin, and phenolic resin.

Examples of photopolymerization initiators include alkylphenone-based photopolymerization initiators, acylphosphine oxide-based photopolymerization initiators, and oxime ester-based photopolymerization initiators. Examples of alkylphenone-based photopolymerization initiators include 2,2'-dimethoxy-1,2-diphenylethane-1-one, 1-hydroxy-cyclohexyl-phenyl-ketone, 2-hydroxy-2-methyl-1-phenyl-propane-1-one, 1-[4-(2-hydroxyethoxy)-phenyl]-2-hydroxy-2-methyl-1-propane-1-one, 2-hydroxy-1-{4-[4-(2-hydroxy-2-methyl-propionyl)-benzyl]phenyl}-2-methyl-propane-1-one, 2-methyl-1-[4-(methylthio)phenyl]-2-morpholinopropane-1-one, 2-benzylmethyl-2-(dimethylamino)-1-(4-morpholinophenyl)-1-butanone, 2-(dimethylamino)-2-[(4-methylphenyl)methyl]-1-(4-morpholinophenyl)-1-butanone, 2-(4-methylbenzyl)-2-(dimethylamino)-1-(4-morpholinophenyl)-1-butanone, and N,N-dimethylaminoacetophenone. Examples of acylphosphine oxide-based photopolymerization initiators include 2,4,6-trimethylbenzoyl diphenylphosphine oxide, bis(2,4,6-trimethylbenzoyl)-phenylphosphine oxide, and bis(2,6-dimethoxybenzoyl)-2,4,4-trimethyl-pentylphosphine oxide. Examples of oxime ester-based photopolymerization initiators include 1,2-octanedion, 1-[4-(phenylthio)phenyl]-2-(O-benzoyloxime), and ethanone-1-[9-ethyl-6-(2-methylbenzoyl)-9H-carbazol-3-yl]-1-(O-acetyloxime). Any one of or a combination of two or more of these may be used as the photopolymerization initiator.

The amount of the photopolymerization initiator is preferably within a range of 0.1 to 10 mass% of a total solid content of the curable composition. The amount of the photopolymerization initiator is more preferably within a range of 1 to 5 mass%.

Inorganic particles and resin particles are added to the hard coat layer 16 to prevent blocking or adjust the hard coat layer 16 so as to have a high refractive index, for example. By forming minute surface irregularities in the hard coat layer 16 with the added inorganic particles and resin particles, blocking, which is a phenomenon in which a front surface and a rear surface adhere to each other, is likely to be suppressed when a hard coat film that is constituted by the substrate film 12 and the hard coat layer 16 is wound into a roll before the low-refractive-index layer 14 is formed. If the hard coat layer 16 has a high refractive index, an antireflection function can be further enhanced when the low-refractive-index layer 14 is layered. "High refractive index" refers to a refractive index of at least 1.50 when the measurement wavelength is 589.3 nm, and is preferably within a range of 1.55 to 1.80, and more preferably within a range of 1.60 to 1.70.

Examples of inorganic particles that can be used for optical adjustment to make the hard coat layer 16 have a high refractive index include metal oxide particles that are made of oxides of metals such as titanium, zirconium, tin, zinc, silicon, niobium, aluminum, chromium, magnesium, germanium, gallium, antimony, and platinum. Particles of any one of or a combination of two or more of these metal oxides may be used as inorganic particles that can be used for optical adjustment. Among these, titanium oxide and zirconium oxide are particularly preferable from the standpoint of achieving both the high refractive index and transparency. Examples of resin particles include resin particles that are made of resins such as (meth)acrylic resin, styrene resin, styrene-(meth)acrylic resin, urethane resin, polyamide resin, silicone resin, epoxy resin, phenolic resin, polyethylene resin, and cellulose. Particles of any one of or a combination of two or more of these resins may be used as resin particles.

The thickness of the hard coat layer 16 is not particular limited, but is preferably at least 0.5 pm from the standpoint of making the hard coat layer sufficiently hard, for example. The thickness is more preferably at least 0.75 pm. Also, the thickness is preferably no greater than 20 pm from the standpoint of suppressing curling due to a difference in thermal contraction between the hard coat layer and the substrate film 12, for example. The thickness is more preferably no greater than 10 pm. The thickness of the hard coat layer 16 refers to the thickness of a relatively smooth portion in a region of the hard coat layer where there are no irregularities formed by inorganic particles or resin particles in the thickness direction.

The arithmetic average roughness Ra of a surface of the hard coat layer 16 in which surface irregularities are formed is preferably within a range of 0.3 to 20 nm from the standpoint of blocking, for example. The arithmetic average roughness is more preferably within a range of 0.5 to 10 nm.

Examples of solvents that can be used in the curable composition for forming the hard coat layer 16 include alcohol-based solvents such as ethanol, isopropyl alcohol (IPA), n-butyl alcohol (NBA), ethylene glycol monomethyl ether (EGM), ethylene glycol monoisopropyl ether (IPG), propylene glycol monomethyl ether (PGM), and diethylene glycol monobutyl ether, ketone-based solvents such as methyl ethyl ketone (MEK), methyl isobutyl ketone (MIBK), cyclohexanone, and acetone, aromatic solvents such as toluene and xylene, ester-based solvents such as ethyl acetate (EtAc), propyl acetate, isopropyl acetate, and butyl acetate (BuAc), and amide-based solvents such as N-methylpyrrolidone, acetamide, and dimethylformamide. Any one of or a combination of two or more of these may be used as the solvent.

It is possible to set the solid content concentration (concentration of components other than the solvent) of the curable composition as appropriate, taking ease of coating, the film thickness, and the like into consideration. The solid content concentration can be set to 1 to 90 mass%, 1.5 to 80 mass%, or 2 to 70 mass%, for example.

The low-refractive-index layer 14 contains inorganic oxide particles 18, hollow silica particles 22, a fluorine-containing compound, and a binder resin.

The binder resin is preferably a cured material of a thermosetting compound or a cured material of an ultraviolet curable compound from the standpoint of scratch resistance of the low-refractive-index layer 14, for example. A cured material of an ultraviolet curable compound is more preferable from the standpoint of productivity, for example.

Examples of ultraviolet curable resins include monomers, oligomers, and prepolymers that include reactive groups that are reactive to ultraviolet rays. Examples of reactive groups that are reactive to ultraviolet rays include radical polymerization type reactive groups including ethylenically unsaturated bonds, such as an acryloyl group, a methacryloyl group, an allyl group, and a vinyl group, and cationic polymerization type reactive groups such as an oxetanyl group. Among these, an acryloyl group, a methacryloyl group, and an oxetanyl group are more preferable, and an acryloyl group and a methacryloyl group are particularly preferable. That is, (meth)acrylates are particularly preferable.

Examples of (meth)acrylates include urethane (meth)acrylate, silicone (meth)acrylate, alkyl (meth)acrylate, and allyl (meth)acrylate. It is possible to use only a monofunctional (meth)acrylate, a multifunctional (meth)acrylate, or a combination of a monofunctional (meth)acrylate and a multifunctional (meth)acrylate. It is more preferable to include a multifunctional (meth)acrylate.

Examples of monofunctional (meth)acrylates include methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, isobornyl (meth)acrylate, 1-adamantyl (meth)acrylate, 2-methyl-2-adamantyl (meth)acrylate, 2-ethyl-2-adamantyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, benzyl (meth)acrylate, 1-naphthylmethyl (meth)acrylate, 2-naphthylmethyl (meth)acrylate, phenoxyethyl (meth)acrylate, phenoxy-2-methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2-hydroxypropyl (meth)acrylate, 2-hydroxyethyl (meth)acrylate, 2-hydroxypropyl (meth)acrylate, 2-hydroxybutyl (meth)acrylate, tetrahydrofurfuryl (meth)acrylate, butoxyethyl (meth)acrylate, ethoxydiethylene glycol (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, and methoxypolypropylene glycol (meth)acrylate.

Examples of multifunctional (meth)acrylates include bifunctional (meth)acrylates, trifunctional (meth)acrylates, and tetrafunctional (meth)acrylates. More specific examples include 1,4-butanediol di(meth)acrylate, 1,6-hexanediol di(meth)acrylate, 1,9-nonanediol di(meth)acrylate, ethylene glycol di(meth)acrylate, diethylene glycol di(meth)acrylate, neopentyl glycol di(meth)acrylate, triethylene glycol di(meth)acrylate, tetraethylene glycol di(meth)acrylate, polyethylene glycol di(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tripentaerythritol tetra(meth)acrylate, tripentaerythritol penta(meth)acrylate, tripentaerythritol hexa(meth)acrylate, tripentaerythritol hepta(meth)acrylate, and tripentaerythritol octa(meth)acrylate.

Any one of or a combination of two or more of the above-listed (meth)acrylates may be used as the ultraviolet curable resin. It is preferable that a multifunctional (meth)acrylate having five or more functional groups is included in the ultraviolet curable resin from the standpoint of improving scratch resistance, and it is preferable that the ratio of the multifunctional (meth)acrylate having five or more functional groups is high.

Also, it is preferable that multifunctional (meth)acrylates include a dimer. A dimer of a multifunctional (meth)acrylate has an excellent curing rate and can easily increase the curing ratio of the curable composition, and accordingly, can further improve scratch resistance. In particular, it is preferable to include at least one selected from the group consisting of dimers of pentaerythritol tri(meth)acrylate, dipentaerythritol penta(meth)acrylate, and dipentaerythritol hexa(meth)acrylate, and it is more preferable to include at least one selected from the group consisting of dimers of pentaerythritol triacrylate, dipentaerythritol pentaacrylate, and dipentaerythritol hexaacrylate.

The amount of the dimer is preferably within a range of 25 to 50 mass% of a total solid content of multifunctional (meth)acrylates from the standpoint of scratch resistance, transparency, and solubility in a solvent. The amount of the dimer is more preferably within a range of 30 to 40 mass%.

The inorganic oxide particles 18 contained in the low-refractive-index layer 14 form raised portions in the surface of the low-refractive-index layer 14. The low-refractive-index layer 14 can have favorable scratch resistance due to the raised portions being formed in the surface of the low-refractive-index layer 14 by the inorganic oxide particles 18.

The inorganic oxide particles 18 may be solid particles or hollow particles. The inorganic oxide particles 18 are preferably solid particles. Solid particles are particles that substantially do not include cavities therein, and the ratio of cavities in the solid particles is less than 5% of the volume of the solid particles. Hollow particles are particles that include cavities therein, and the ratio of the cavities in the hollow particles is at least 5% of the volume of the hollow particles. If the inorganic oxide particles 18 are solid particles, scratch resistance of the low-refractive-index layer 14 is improved, and scratch resistance of the antireflection film 10 is improved. If the inorganic oxide particles 18 are hollow particles, it is possible to reduce the refractive index of the low-refractive-index layer 14 and suppress reflection of light. The ratio of cavities in the hollow particles is preferably 10% to 80% of the volume of the hollow particles. The ratio is more preferably 20% to 60%, and further preferably 30% to 60%. If the ratio of cavities is at least 10%, it is possible to reduce the refractive index and suppress reflection of light. If the ratio of cavities is no greater than 80%, it is possible to suppress a reduction in dispersibility of the inorganic oxide particles 18.

Examples of the inorganic oxide particles 18 include metal oxide particles that are made of oxides of metals such as titanium, zirconium, silicon, aluminum, and calcium. Particles of any one of or a combination of two or more of these metal oxides may be used as the inorganic oxide particles 18. Among these, silica particles and alumina particles are preferable from the standpoint of low refractive index, excellent transparency, and high hardness, and alumina particles are particularly preferable.

The shape of the inorganic oxide particles 18 is not particularly limited, and may be a spherical shape, a needle-like shape, a scale-like shape, a rod-like shape, a fibrous shape, an amorphous shape, or the like. Among these, a spherical shape is preferable.

In order to form raised portions in the surface of the low-refractive-index layer 14 and achieve favorable scratch resistance, a difference (r-d) between the average particle size r of the inorganic oxide particles 18 and the average thickness d of the low-refractive-index layer 14 is at least 10 nm. The difference (r-d) is more preferably at least 15 nm, and further preferably at least 18 nm. On the other hand, the difference (r-d) is no greater than 300 nm from the standpoint of maintaining transparency by suppressing the height of raised portions to be formed, for example. The difference is more preferably no greater than 200 nm, and further preferably no greater than 100 nm.

The average particle size r of the inorganic oxide particles 18 depends on the average thickness d of the low-refractive-index layer 14, but is preferably within a range of 60 to 400 nm. The average particle size is more preferably within a range of 70 to 300 nm, and further preferably within a range of 90 to 200 nm. The average particle size r of the inorganic oxide particles 18 is an arithmetic average value that is calculated on the volume basis using a laser diffraction scattering method in accordance with JIS Z8825 and is an average particle size of particles including not only primary particles but also secondary particles that are aggregates of particles.

The amount of the inorganic oxide particles 18 contained in the low-refractive-index layer 14 is at least 0.1 mass% and no greater than 4.0 mass% relative to 100 mass% of the solid content of the low-refractive-index layer 14. If the amount of the inorganic oxide particles 18 contained in the low-refractive-index layer 14 is at least 0.1 mass% relative to 100 mass% of the solid content of the low-refractive-index layer 14, excellent scratch resistance can be achieved. From this standpoint, the amount of the inorganic oxide particles 18 contained in the low-refractive-index layer 14 is more preferably at least 0.5 mass%, and further preferably at least 1.0 mass%, relative to 100 mass% of the solid content of the low-refractive-index layer 14. If the amount of the inorganic oxide particles 18 contained in the low-refractive-index layer 14 is no greater than 4.0 mass% relative to 100 mass% of the solid content of the low-refractive-index layer 14, high transparency can be achieved. From this standpoint, the amount of the inorganic oxide particles 18 contained in the low-refractive-index layer 14 is more preferably no greater than 3.5 mass%, and further preferably no greater than 3.2 mass%, relative to 100 mass% of the solid content of the low-refractive-index layer 14. Note that the term "solid content of the low-refractive-index layer 14" used herein refers to components other than components that are liquid at normal temperature and are not fixed in the binder resin in the low-refractive-index layer 14. The solid content of the low-refractive-index layer 14 includes the inorganic oxide particles 18, the hollow silica particles 22, the binder resin, the fluorine-containing compound fixed in the binder resin, and the like. The solid content does not include an oil component that is used as an additive, nor a surfactant that is not fixed in the binder resin, or the like.

The hollow silica particles 22 are particles that have an average particle size smaller than the average thickness of the low-refractive-index layer 14. The hollow silica particles 22 preferably have a smaller average particle size than the inorganic oxide particles 18 that form raised portions in the surface of the low-refractive-index layer 14. The hollow silica particles 22 substantially do not contribute to the formation of surface irregularities of the low-refractive-index layer 14. The hollow silica particles 22 include cavities therein, and the ratio of the cavities in the hollow silica particles is at least 5% of the volume of the hollow silica particles. Hollow means a core-shell structure that is constituted by an outer shell and a cavity inside the shell, or a porous structure that includes many cavities, for example. Due to the hollow silica particles 22 having a hollow structure, the refractive index of the low-refractive-index layer 14 can be reduced to suppress reflection of light. The shape of the hollow silica particles 22 is not particularly limited, but is preferably a spherical shape, a spindle-like shape, an egg-like shape, a flat plate shape, a cube shape, an amorphous shape, or the like. Among these, a spherical shape, a flat plate shape, and a cube shape are particularly preferable, for example.

The ratio of cavities in the hollow silica particles 22 is preferably 10% to 80% of the volume of the hollow silica particles. The ratio of cavities is more preferably 20% to 60% of the volume, and further preferably 30% to 60% of the volume. If the ratio of cavities is at least 10% of the volume, it is possible to reduce the refractive index and suppress reflection of light. If the ratio of cavities is no greater than 80% of the volume, it is possible to suppress a reduction in dispersibility of the hollow silica particles 22.

The average particle size of the hollow silica particles 22 depends on the average thickness of the low-refractive-index layer 14, but is preferably at least 5 nm and no greater than 100 nm. The average particle size is more preferably at least 20 nm and no greater than 80 nm, and further preferably at least 40 nm and no greater than 70 nm. If the average particle size of the hollow silica particles 22 is within these preferable ranges, an excellent antireflection effect and transparency of the low-refractive-index layer 14 can be achieved. The average particle size is an arithmetic average value that is calculated on the volume basis using the laser diffraction scattering method in accordance with JIS Z8825. The average particle size is an average particle size of particles including not only primary particles but also secondary particles that are aggregates of particles.

The refractive index of the hollow silica particles 22 is preferably within a range of 1.01 to 1.45. The refractive index is more preferably within a range of 1.15 to 1.38, and further preferably within a range of 1.15 to 1.35. If the refractive index is within the above ranges, an excellent antireflection effect can be achieved.

The amount of the hollow silica particles 22 contained in the low-refractive-index layer 14 is at least 6.0 mass% and no greater than 49.9 mass% relative to 100 mass% of the solid content of the low-refractive-index layer 14. If the amount of the hollow silica particles 22 contained in the low-refractive-index layer 14 is at least 6.0 mass% relative to 100 mass% of the solid content of the low-refractive-index layer 14, an excellent antireflection property can be achieved. From this standpoint, the amount of the hollow silica particles 22 contained in the low-refractive-index layer 14 is more preferably at least 10 mass%, further preferably at least 20 mass%, and particularly preferably at least 30 mass%, relative to 100 mass% of the solid content of the low-refractive-index layer 14. If the amount of the hollow silica particles 22 contained in the low-refractive-index layer 14 is no greater than 49.9 mass% relative to 100 mass% of the solid content of the low-refractive-index layer 14, a reduction in scratch resistance can be suppressed. From this standpoint, the amount of the hollow silica particles 22 contained in the low-refractive-index layer 14 is more preferably no greater than 45 mass%, and further preferably no greater than 40 mass%, relative to 100 mass% of the solid content of the low-refractive-index layer 14.

The total amount of the inorganic oxide particles 18 and the hollow silica particles 22 contained in the low-refractive-index layer 14 is at least 10 mass% and no greater than 50 mass% relative to 100 mass% of the solid content of the low-refractive-index layer 14. If the total amount of the inorganic oxide particles 18 and the hollow silica particles 22 contained in the low-refractive-index layer 14 is at least 10 mass% relative to 100 mass% of the solid content of the low-refractive-index layer 14, excellent scratch resistance can be achieved. From this standpoint, the total amount of the inorganic oxide particles 18 and the hollow silica particles 22 contained in the low-refractive-index layer 14 is more preferably at least 20 mass%, and further preferably at least 30 mass%, relative to 100 mass% of the solid content of the low-refractive-index layer 14. On the other hand, if the total amount of the inorganic oxide particles 18 and the hollow silica particles 22 contained in the low-refractive-index layer 14 is no greater than 50 mass% relative to 100 mass% of the solid content of the low-refractive-index layer 14, the inorganic oxide particles 18 and the hollow silica particles 22 can be sufficiently retained in the low-refractive-index layer 14, and accordingly, excellent scratch resistance can be achieved. From this standpoint, the total amount of the inorganic oxide particles 18 and the hollow silica particles 22 contained in the low-refractive-index layer 14 is more preferably no greater than 48 mass%, further preferably no greater than 46 mass%, and particularly preferably no greater than 43 mass%, relative to 100 mass% of the solid content of the low-refractive-index layer 14.

The fluorine-containing compound can serve as an antifouling agent. Also, the fluorine-containing compound improves slipperiness of the surface of the low-refractive-index layer 14, and accordingly, contributes to improvement of scratch resistance. Examples of fluorine-containing compounds include (meth)acrylates having perfluoroalkyl groups. Examples of such compounds include "KY-1203" manufactured by Shin-Etsu Chemical Co., Ltd., "MEGAFACE RS-75" manufactured by DIC Corporation, "OPTOOL DAC-HP" manufactured by Daikin Industries, Ltd., and "FTERGENT 601AD" manufactured by NEOS COMPANY LIMITED. Such a fluorine-containing compound can suppress adhesion of dirt and fingerprints and facilitate removal of dirt and fingerprints.

The amount of the fluorine-containing compound contained in the low-refractive-index layer 14 is preferably at least 1.0 mass% and no greater than 15.0 mass% relative to 100 mass% of the solid content of the low-refractive-index layer 14. If the amount of the fluorine-containing compound contained in the low-refractive-index layer 14 is at least 1.0 mass% relative to 100 mass% of the solid content of the low-refractive-index layer 14, slipperiness of the surface of the low-refractive-index layer 14 is improved and scratch resistance is improved. Also, an antifouling property is improved. From this standpoint, the amount of the fluorine-containing compound contained in the low-refractive-index layer 14 is more preferably at least 2.0 mass%, and further preferably at least 3.0 mass%, relative to 100 mass% of the solid content of the low-refractive-index layer 14. If the amount of the fluorine-containing compound contained in the low-refractive-index layer 14 is no greater than 15.0 mass% relative to 100 mass% of the solid content of the low-refractive-index layer 14, a reduction in scratch resistance can be suppressed. From this standpoint, the amount of the fluorine-containing compound contained in the low-refractive-index layer 14 is more preferably no greater than 13.0 mass%, further preferably no greater than 10.0 mass%, and particularly preferably no greater than 5.0 mass%, relative to 100 mass% of the solid content of the low-refractive-index layer 14.

The average thickness d of the low-refractive-index layer 14 is preferably within a range of 60 to 160 nm, more preferably within a range of 70 to 140 nm, and further preferably within a range of 80 to 120 nm. If the average thickness is within the above ranges, it is possible to achieve a good luminous reflectance to suppress reflection of light. The average thickness of the low-refractive-index layer 14 is the thickness of a relatively smooth portion in a region of the low-refractive-index layer where the inorganic oxide particles 18 are absent in the thickness direction.

The low-refractive-index layer 14 may also contain additives or the like, as necessary. Examples of such additives include an antifouling agent, a dispersant, a leveling agent, an antifoaming agent, a thixotropic agent, an antibacterial agent, a flame retardant, a slipping agent, and a refractive index adjusting agent.

The low-refractive-index layer 14 can be formed using a composition that contains the inorganic oxide particles 18, the hollow silica particles 22, the fluorine-containing compound, and the binder resin. It is preferable that the fluorine-containing compound and the binder resin have reactive groups that are reactive to ultraviolet rays. Examples of reactive groups that are reactive to ultraviolet rays include a (meth)acryloyl group. If the fluorine-containing compound and the binder resin have reactive groups that are reactive to ultraviolet rays, scratch resistance of the low-refractive-index layer 14 is improved, and scratch resistance of the antireflection film 10 is improved. If the binder resin includes a resin (ultraviolet curable resin) having a reactive group that is reactive to ultraviolet rays, it is preferable that the composition for forming the low-refractive-index layer 14 contains a photopolymerization initiator. The composition for forming the low-refractive-index layer 14 may also contain a solvent as necessary. The binder resin of the low-refractive-index layer 14 may be constituted by an ultraviolet curable resin, a non-ultraviolet curable resin, or a combination of an ultraviolet curable resin and a non-ultraviolet curable resin.

Examples of non-ultraviolet curable resins include thermoplastic resins and thermosetting resins. Examples of thermoplastic resins include polyester resin, polyether resin, polyolefin resin, and polyamide resin. Examples of thermosetting resins include unsaturated polyester resin, epoxy resin, alkyd resin, and phenolic resin.

Examples of photopolymerization initiators include alkylphenone-based photopolymerization initiators, acylphosphine oxide-based photopolymerization initiators, and oxime ester-based photopolymerization initiators. Examples of alkylphenone-based photopolymerization initiators include 2,2'-dimethoxy-1,2-diphenylethane-1-one, 1-hydroxy-cyclohexyl-phenyl-ketone, 2-hydroxy-2-methyl-1-phenyl-propane-1-one, 1-[4-(2-hydroxyethoxy)-phenyl]-2-hydroxy-2-methyl-1-propane-1-one, 2-hydroxy-1-{4-[4-(2-hydroxy-2-methyl-propionyl)-benzyl]phenyl}-2-methyl-propane-1-one, 2-methyl-1-[4-(methylthio)phenyl]-2-morpholinopropane-1-one, 2-benzylmethyl-2-(dimethylamino)-1-(4-morpholinophenyl)-1-butanone, 2-(dimethylamino)-2-[(4-methylphenyl)methyl]-1-(4-morpholinophenyl)-1-butanone, 2-(4-methylbenzyl)-2-(dimethylamino)-1-(4-morpholinophenyl)-1-butanone, and N,N-dimethylaminoacetophenone. Examples of acylphosphine oxide-based photopolymerization initiators include 2,4,6-trimethylbenzoyl diphenylphosphine oxide, bis(2,4,6-trimethylbenzoyl)-phenylphosphine oxide, and bis(2,6-dimethoxybenzoyl)-2,4,4-trimethyl-pentylphosphine oxide. Examples of oxime ester-based photopolymerization initiators include 1,2-octanedion, 1-[4-(phenylthio)phenyl]-2-(O-benzoyloxime), and ethanone-1-[9-ethyl-6-(2-methylbenzoyl)-9H-carbazol-3-yl]-1-(O-acetyloxime). Any one of or a combination of two or more of these may be used as the photopolymerization initiator.

The amount of the photopolymerization initiator is preferably within a range of 0.1 to 10 mass% of the total solid content of the composition for forming the low-refractive-index layer 14. The amount of the photopolymerization initiator is more preferably within a range of 1 to 5 mass%.

Examples of solvents that can be used in the composition for forming the low-refractive-index layer 14 include alcohol-based solvents such as ethylene glycol monomethyl ether (EGM), propylene glycol monomethyl ether (PGM), and diethylene glycol monobutyl ether, ketone-based solvents such as methyl ethyl ketone (MEK), methyl isobutyl ketone (MIBK), cyclohexanone, and acetone, aromatic solvents such as toluene and xylene, and amide-based solvents such as N-methylpyrrolidone, acetamide, and dimethylformamide. Any one of or a combination of two or more of these may be used as the solvent.

The antireflection film 10 can be manufactured by applying a composition for forming the hard coat layer 16 to a surface of the substrate film 12, drying the composition as necessary, and then curing the composition through ultraviolet irradiation to form the hard coat layer 16 on the surface of the substrate film 12, thereafter applying a composition for forming the low-refractive-index layer 14 to a surface of the hard coat layer 16, drying the composition as necessary, and then curing the composition through ultraviolet irradiation to form the low-refractive-index layer 14 on the surface of the hard coat layer 16. At this time, in order to improve adhesion between the substrate film 12 and the hard coat layer 16, it is also possible to perform surface treatment on the surface of the substrate film 12 before applying the composition for forming the hard coat layer 16. Examples of the surface treatment include corona treatment, plasma treatment, hot air treatment, ozone treatment, and ultraviolet treatment.

The composition for forming the hard coat layer 16 and the composition for forming the low-refractive-index layer 14 can be applied using various coating methods such as reverse gravure coating, direct gravure coating, die coating, bar coating, wire bar coating, roll coating, spin coating, dip coating, spray coating, knife coating, and kiss coating, and various printing methods such as an inkjet method, offset printing, screen printing, and flexo printing.

There is no particular limitation to the drying steps so long as solvents or the like that are used in the applied solutions can be removed, but it is preferable to perform the drying steps at a temperature of 50°C to 150°C for about 10 to 180 seconds. The drying temperature is particularly preferably 50°C to 120°C.

Ultraviolet irradiation can be performed using a high-pressure mercury lamp, an electrodeless (microwave) lamp, a xenon lamp, a metal halide lamp, or any other suitable ultraviolet irradiation device. Ultraviolet irradiation may be performed in an atmosphere of an inert gas such as nitrogen, as necessary. The ultraviolet irradiation amount is not particularly limited, but is preferably 50 to 800 mJ/cm², and more preferably 100 to 300 mJ/cm².

An arithmetic average roughness Sa of the surface of the low-refractive-index layer 14 is preferably 1.0 to 20 nm, more preferably 3.0 to 15 nm, and further preferably 5.0 to 10 nm from the standpoint of achieving good ease of finger sliding and scratch resistance.

Haze of the antireflection film 10 is preferably no greater than 2.0, more preferably no greater than 1.5, and further preferably no greater than 1.0 from the standpoint of good visibility, for example.

The lower the luminous reflectance of the antireflection film 10 is, the better, and the luminous reflectance is more preferably no higher than 2.0%, and further preferably no higher than 1.0%.

The antireflection film 10 configured as described above includes the substrate film 12, the hard coat layer 16 formed over a surface of the substrate film 12, and the low-refractive-index layer 14 formed over a surface of the hard coat layer 16. The low-refractive-index layer 14 contains the inorganic oxide particles 18 that form raised portions in the surface of the low-refractive-index layer 14, the hollow silica particles 22 having an average particle size smaller than the average thickness of the low-refractive-index layer 14, the fluorine-containing compound, and the binder resin. The amount of the inorganic oxide particles 18 contained in the low-refractive-index layer 14 is at least 0.1 mass% and no greater than 4.0 mass% relative to 100 mass% of the solid content of the low-refractive-index layer 14. The total amount of the inorganic oxide particles 18 and the hollow silica particles 22 contained in the low-refractive-index layer 14 is at least 10 mass% and no greater than 50 mass% relative to 100 mass% of the solid content of the low-refractive-index layer 14. A difference (r-d) between the average particle size r of the inorganic oxide particles 18 and the average thickness d of the low-refractive-index layer 14 is at least 10 nm and no greater than 300 nm. Therefore, the antireflection film 10 has a high antireflection property, excellent scratch resistance, and a favorable antifouling property.

The antireflection film according to the present invention is not limited to the configuration of the antireflection film 10 according to the first embodiment. The following describes other embodiments of the antireflection film according to the present invention.

Fig. 2 shows an antireflection film 20 according to a second embodiment. The antireflection film 20 according to the second embodiment includes the substrate film 12, the hard coat layer 16 formed over a surface of the substrate film 12, a high-refractive-index layer 17 formed over a surface of the hard coat layer 16, and the low-refractive-index layer 14 formed over a surface of the high-refractive-index layer 17. The antireflection film 20 includes the substrate film 12, the hard coat layer 16, the high-refractive-index layer 17, and the low-refractive-index layer 14 layered in this order from the substrate film 12 side.

The antireflection film 20 according to the second embodiment differs from the antireflection film 10 according to the first embodiment in that the antireflection film 20 includes the high-refractive-index layer 17 between the hard coat layer 16 and the low-refractive-index layer 14, but is the same as the antireflection film 10 according to the first embodiment in the other aspects, and descriptions of the same structures are omitted.

The high-refractive-index layer 17 can be formed using materials that are appropriately selected from the materials described for the hard coat layer 16. The refractive index of the high-refractive-index layer 17 is preferably within a range of 1.55 to 1.80, and more preferably within a range of 1.60 to 1.70. The refractive index of the high-refractive-index layer 17 is measured at a measurement wavelength of 589.3 nm. The refractive index of the high-refractive-index layer 17 can be adjusted by selecting a binder resin, inorganic particles, and resin particles, and adjusting amounts of these materials, for example.

The average thickness of the high-refractive-index layer 17 varies depending on setting of the refractive index, but if the average thickness is at least 50 nm and no greater than 200 nm, for example, the antireflection function can be further enhanced.

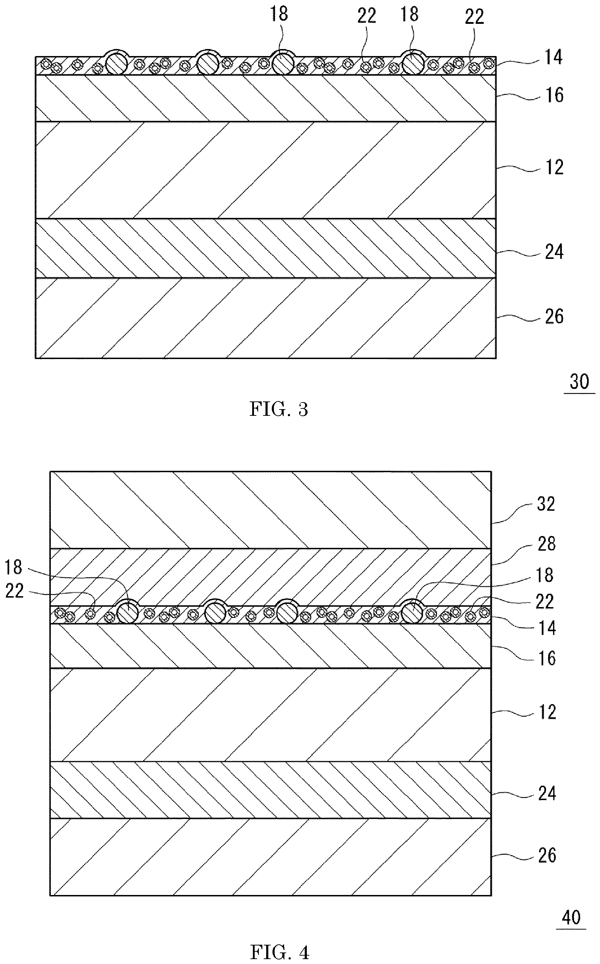

Fig. 3 shows an antireflection film 30 according to a third embodiment. The antireflection film 30 according to the third embodiment includes the substrate film 12, the hard coat layer 16 formed over a surface of the substrate film 12, and the low-refractive-index layer 14 formed over a surface of the hard coat layer 16. The antireflection film 30 also includes a transparent adhesive layer 24 on the other surface of the substrate film 12. A release film 26 is provided on a surface of the transparent adhesive layer 24, as necessary. The release film 26 serves as a protective layer for the transparent adhesive layer 24 before use, and is separated from the transparent adhesive layer 24 when the antireflection film is used.

The antireflection film 30 according to the third embodiment differs from the antireflection film 10 according to the first embodiment in that the antireflection film 30 includes the transparent adhesive layer 24 on the other surface of the substrate film 12, but is the same as the antireflection film 10 according to the first embodiment in the other aspects, and descriptions of the same structures are omitted.

The transparent adhesive layer 24 is for attaching the antireflection film 30 to a surface of a display or the like with good adhesiveness. Also, due to including the transparent adhesive layer 24, the antireflection film 30 has an effect of preventing shattering of glass that constitutes the display or the like. That is, the antireflection film 30 also serves as an anti-shattering film.

An adhesive composition that forms the transparent adhesive layer 24 may contain known adhesive resins such as an acrylic-based adhesive, a silicone-based adhesive, and a urethane-based adhesive. Among these, an acrylic-based adhesive is preferable from the standpoint of optical transparency and heat resistance. The adhesive composition preferably contains a crosslinking agent in order to increase a cohesive force of the transparent adhesive layer 24. Examples of crosslinking agents include an isocyanate-based crosslinking agent, an epoxy-based crosslinking agent, an aziridine-based crosslinking agent, and a chelate-based crosslinking agent.

The adhesive composition may also contain additives as necessary. Examples of additives include known additives such as a plasticizer, a silane coupling agent, a surfactant, an antioxidant, a filler, a curing accelerator, and a curing retarder. Also, the adhesive composition may be diluted with an organic solvent from the standpoint of productivity and the like.

The thickness of the transparent adhesive layer 24 is not particularly limited, but is preferably within a range of 5 to 100 pm. The thickness is more preferably within a range of 10 to 50 pm.

The transparent adhesive layer 24 can be formed by a method of directly applying the adhesive composition to the other surface of the substrate film 12, a method of applying the adhesive composition to a surface of the release film 26 to form the adhesive layer 24 and thereafter transferring the adhesive layer 24 to the other surface of the substrate film 12, or a method of applying the adhesive composition to a surface of a first release film to form the adhesive layer 24, attaching a second release film to the adhesive layer 24, and transferring the adhesive layer 24 to the other surface of the substrate film 12 by separating either one of the release films, for example.

An adhesive force of the transparent adhesive layer 24 with respect to glass is preferably at least 4 N/25 mm from the standpoint of the effect of preventing shattering of glass. The adhesive force is more preferably at least 6 N/25 mm, and further preferably at least 10 N/25 mm.

Fig. 4 shows an antireflection film 40 according to a fourth embodiment. The antireflection film 40 according to the fourth embodiment includes the substrate film 12, the hard coat layer 16 formed over a surface of the substrate film 12, the low-refractive-index layer 14 formed over a surface of the hard coat layer 16, and a protective film 32 formed over a surface of the low-refractive-index layer 14 with an adhesive layer 28 arranged therebetween. The antireflection film 40 also includes the transparent adhesive layer 24 on the other surface of the substrate film 12. The release film 26 is provided on a surface of the transparent adhesive layer 24, as necessary.

The antireflection film 40 according to the fourth embodiment differs from the antireflection film 30 according to the third embodiment in that the antireflection film 40 includes the protective film 32 over the surface of the low-refractive-index layer 14 with the adhesive layer 28 arranged therebetween, but is the same as the antireflection film 30 according to the third embodiment in the other aspects, and descriptions of the same structures are omitted.

The protective film 32 can keep the surface of the low-refractive-index layer 14 from being damaged when the antireflection film is handled in continuous processing such as a roll process or when the antireflection film is attached to a display or the like, for example. The protective film 32 is attached to the surface of the low-refractive-index layer 14 with the adhesive layer 28 arranged therebetween. The protective film 32 is separated from the surface of the low-refractive-index layer 14 together with the adhesive layer 28 after processing or the like. Therefore, the adhesive layer 28 is adjusted such that an adhesive force that acts between the protective film 32 and the adhesive layer 28 is stronger than an adhesive force that acts between the low-refractive-index layer 14 and the adhesive layer 28, and the low-refractive-index layer 14 and the adhesive layer 28 can be separated at an interface therebetween.

The material of the protective film 32 can be appropriately selected from the examples of the material of the substrate film 12, for example. The thickness of the protective film 32 is not particularly limited, but can be set to be within a range of 2 to 500 pm or 2 to 200 pm.

An adhesive that forms the adhesive layer 28 is not particularly limited, and an acrylic-based adhesive, a silicone-based adhesive, a urethane-based adhesive, or the like can be preferably used. In particular, an acrylic-based adhesive has excellent transparency and heat resistance, and therefore is preferable. The acrylic-based adhesive is preferably made of an adhesive composition that contains a (meth)acrylic polymer and a crosslinking agent.

The (meth)acrylic polymer is a homopolymer or copolymer of (meth)acrylic monomers. Examples of (meth)acrylic monomers include alkyl group-containing (meth)acrylic monomers, carboxyl group-containing (meth)acrylic monomers, and hydroxyl group-containing (meth)acrylic monomers.

Examples of alkyl group-containing (meth)acrylic monomers include (meth)acrylic monomers having an alkyl group having 2 to 30 carbon atoms. The alkyl group having 2 to 30 carbon atoms may be linear, branched chain, or cyclic. More specific examples of alkyl group-containing (meth)acrylic monomers include isostearyl (meth)acrylate, stearyl (meth)acrylate, lauryl (meth)acrylate, dodecyl (meth)acrylate, decyl (meth)acrylate, isononyl (meth)acrylate, nonyl (meth)acrylate, isooctyl (meth)acrylate, octyl (meth)acrylate, isobutyl (meth)acrylate, n-butyl (meth)acrylate, pentyl (meth)acrylate, hexyl (meth)acrylate, cyclohexyl (meth)acrylate, 2-ethylhexyl (meth)acrylate, propyl (meth)acrylate, ethyl (meth)acrylate, and methyl (meth)acrylate.

Examples of carboxyl group-containing (meth)acrylic monomers include (meth)acrylic acid, carboxyethyl (meth)acrylate, and carboxypentyl (meth)acrylate. The carboxyl group may be located at the end of the alkyl chain or in the middle of the alkyl chain.

Examples of hydroxyl group-containing (meth)acrylic monomers include hydroxylauryl (meth)acrylate, hydroxydecyl (meth)acrylate, hydroxyoctyl (meth)acrylate, hydroxyhexyl (meth)acrylate, hydroxybutyl (meth)acrylate, hydroxypropyl (meth)acrylate, and hydroxyethyl (meth)acrylate. The hydroxyl group may be located at the end of the alkyl chain or in the middle of the alkyl chain.

The (meth)acrylic polymer may be formed by any one type of or a combination of two or more types of the above-listed (meth)acrylic monomers.

Examples of crosslinking agents include an isocyanate-based crosslinking agent, an epoxy-based crosslinking agent, a metal chelate-based crosslinking agent, a metal alkoxide-based crosslinking agent, a carbodiimide-based crosslinking agent, an oxazoline-based crosslinking agent, an aziridine-based crosslinking agent, and a melamine-based crosslinking agent. Any one of or a combination of two or more of these may be used as the crosslinking agent.

The adhesive composition may also contain other additives in addition to the (meth)acrylic polymer and the crosslinking agent. Examples of other additives include a crosslinking accelerator, a crosslinking retarder, an adhesiveness imparting resin (tackifier), an antistatic agent, a silane coupling agent, a plasticizer, a release aiding agent, a pigment, a dye, a humectant, a thickener, an ultraviolet absorbing agent, an antiseptic agent, an antioxidant, a metal deactivator, an alkylating agent, and a flame retardant. These additives are appropriately selected and used according to an intended use or the purpose of use of the adhesive.

The thickness of the adhesive layer 28 is not particularly limited, but is preferably within a range of 1 to 10 pm. The thickness is more preferably within a range of 2 to 7 pm.

For example, as described in the above embodiments, surface treatment may be performed on the surface of the substrate film 12, but a configuration is also possible in which an easy adhesive layer is provided on the surface of the substrate film 12, instead of surface treatment.

As shown in Fig. 4, the above-described protective film 32 is added to the antireflection film 30 according to the third embodiment shown in Fig. 3, but may also be added to the antireflection film 10 according to the first embodiment shown in Fig. 1 or the antireflection film 20 according to the second embodiment shown in Fig. 2.

Furthermore, various functional layers such as a gas barrier property improving layer, an antistatic layer, and an oligomer block layer may be provided on the surface of the substrate film 12 in advance to the formation of each layer.

The antistatic layer is provided to suppress adhesion of dust or the like in a surrounding region to the surface due to static charging caused by peeling or friction. The antistatic layer is preferably made of an antistatic layer forming composition that contains an antistatic agent.

Examples of antistatic agents include cationic antistatic agents such as quaternary ammonium salt and pyridium salt, anionic antistatic agents such as alkali metal salts of sulfonic acid, phosphoric acid, and carboxylic acid, amphoteric antistatic agents such as an amino acid-based antistatic agent and an amino acid sulfate-based antistatic agent, nonionic antistatic agents such as an aminoalcohol-based antistatic agent, a glycerol-based antistatic agent, and a polyethylene glycol-based antistatic agent, ionic compounds, conductive polymers such as a polyacetylene-based polymer and a polythiophene-based polymer, conductive particles such as metal oxide particles and carbon nanotubes, and conductive fibers. Among these, an antistatic agent that is obtained by combining a dopant and a conductive polymer such as polyacetylene or polythiophene, metal particles, and metal oxide particles are preferable from the standpoint of low dependence on humidity and preventing bleeding out from the antistatic layer.

Specific examples of antistatic agents constituted by the above-mentioned conductive polymers include conductive polymers such as polyacetylene, polyaniline, polythiophene, polypyrrole, polyphenylene sulfide, poly(1,6-heptadiyne), polybiphenylene(polyparaphenylene), polyparaphenylene sulfide, polyphenylacetylene, poly(2,5-thienylene), and derivatives thereof, and a preferable example is a polythiophene-based organic conductive polymer (e.g., 3,4-ethylenedioxythiophene (PEDOT)). Any one of or a combination of two or more of these may be used as the antistatic agent.

The amount of the antistatic agent is preferably within a range of 1 to 50 mass% of a total solid content of the antistatic layer forming composition. The amount of the antistatic agent is more preferably within a range of 5 to 40 mass%, and further preferably within a range of 10 to 20 mass%. If the amount of the antistatic agent is at least 1mass%, the antistatic layer can have a good antistatic property, and if the amount of the antistatic agent is no greater than 50 mass%, a highly transparent film that has a favorable total light transmittance can be obtained.

The antistatic layer may also contain a binder resin. The binder resin is not particularly limited so long as the binder resin is compatible with the antistatic agent or the antistatic agent can be mixed and dispersed in the binder resin, and the binder resin may be a curable resin or a thermoplastic resin.

Examples of thermoplastic resins include polyester resins such as polyethylene terephthalate, polybutylene terephthalate, and polyethylene naphthalate, polyimide resins such as polyimide and polyamidimide, polyamide resins such as Polyamide 6, Polyamide 66, Polyamide 12, and Polyamide 11, polyvinylidene fluoride, acrylic resin, vinyl resins such as polyvinyl alcohol, and urethane resin. Materials similar to those used to form the hard coat layer 16 can be used as the curable resin.

The thickness of the antistatic layer is preferably 1 nm to 5 pm, more preferably 10 nm to 1 pm, and further preferably 30 nm to 300 nm from the standpoint of preventing static charging.

### Examples

The following describes the present invention in detail using examples and comparative examples.

### Example 1

### Preparation of hard coat layer forming composition

A hard coat layer forming composition was prepared by adding a photopolymerization initiator "Omnirad127" (manufactured by IGM Resins B.V.) to an ultraviolet curable resin composition ESS-620 (manufactured by DIC Corporation, urethane acrylate resin, solvent (ethyl acetate), solid content concentration: 79 mass%) such that the amount of the photopolymerization initiator was 3 mass% relative to the total amount of the hard coat layer forming composition, and by adding ethyl acetate such that the solid content concentration became 31 mass%.

### Formation of hard coat layer

A hard coat layer (thickness: 5 pm) was formed by applying the hard coat layer forming composition to a substrate film (polyimide film manufactured by TAIMIDE TECH. INC., "OT2 (h)", thickness: 50 pm) using a #12 wire bar, drying the composition at 80°C for 60 seconds, and then irradiating the composition with ultraviolet rays with a light quantity of 200 mJ/cm² using a high-pressure mercury lamp.

### Preparation of high-refractive-index layer forming composition

A high-refractive-index layer forming composition was prepared by adding methyl ethyl ketone to an ultraviolet curable resin composition TYZ65-01 (manufactured by TOYOCHEM CO., LTD., acrylic-based resin, containing zirconium oxide (average particle size: 80 nm), photopolymerization initiator, solvent (cyclohexanone, methyl isobutyl ketone, propylene glycol monomethyl ether), solid content concentration: 35 mass%) such that the solid content concentration became 8 mass%.

### Formation of high-refractive-index layer

A high-refractive-index layer was formed by applying the high-refractive-index layer forming composition to a surface of the hard coat layer using a #4 wire bar, drying the composition at 80°C for 60 seconds, and then irradiating the composition with ultraviolet rays with a light quantity of 200 mJ/cm² using a high-pressure mercury lamp in a nitrogen atmosphere.

### Preparation of low-refractive-index layer forming composition

A low-refractive-index layer forming composition was prepared by blending a binder resin, inorganic oxide particles, hollow silica particles, and a fluorine-containing compound at ratios (mass% of the total solid content) shown in Table 1 and adjusting the solid content concentration to 3 mass% using a solvent.

The following materials were used as materials of the low-refractive-index layer forming composition.
Binder resin: "ARONIX MT-3041" manufactured by TOAGOSEI CO., LTD., multifunctional acrylate, solid content concentration: 100 mass%
Inorganic oxide particles 1: "NANOBYK3601" manufactured by BYK JAPAN KK, alumina particles, average particle size: 180 nm, dispersion medium:
   tripropylene glycol diacrylate (TPGDA: binder resin), alumina content: 30 mass% Inorganic oxide particles 2: "Z-607-ALU" manufactured by Aica Kogyo Company, Limited, alumina particles, average particle size: 60 nm, methyl isobutyl ketone, alumina content: 30 mass%
Inorganic oxide particles 3: "MEK-AC-5140Z" manufactured by Nissan Chemical Corporation, silica particles, average particle size: 100 nm, methyl ethyl ketone, silica content: 40 mass%
Hollow silica particles: "THRULYA 4320" manufactured by JGC Catalysts and Chemicals Ltd., average particle size: 60 nm, solid content concentration: 20 mass%
Fluorine-containing compound: "KY-1203" manufactured by Shin-Etsu Chemical Co., Ltd., perfluoroalkyl group-containing (meth)acrylate, methyl isobutyl ketone, solid content concentration: 20 mass%
Photopolymerization initiator: "Omnirad127" manufactured by IGM Resins B.Y.

### Formation of low-refractive-index layer

A low-refractive-index layer was formed by applying the low-refractive-index layer forming composition to a surface of the high-refractive-index layer using a #3 wire bar, drying the composition at 100°C for 60 seconds, and then irradiating the composition with ultraviolet rays with a light quantity of 200 mJ/cm² using a high-pressure mercury lamp in a nitrogen atmosphere. Thus, an antireflection film was manufactured.

### Example 2

An antireflection film was manufactured in the same manner as in Example 1 in all aspects other than that the substrate film was changed to a PET film 1 ("COSMOSHINE SRFTA048" manufactured by TOYOBO CO., LTD., thickness: 80 pm).

### Example 3

An antireflection film was manufactured in the same manner as in Example 1 in all aspects other than that the substrate film was changed to a PET film 2 ("Lumirror U403" manufactured by Toray Industries, Inc., thickness: 50 µm).

### Examples 4 to 11

Antireflection films were manufactured in the same manner as in Example 3 in all aspects other than that blending ratios were changed to ratios (mass% of the total solid content) shown in Table 1.

### Example 12

An antireflection film was manufactured in the same manner as in Example 3 in all aspects other than that the inorganic oxide particles were changed from alumina particles to silica particles in preparation of the low-refractive-index layer forming composition.

### Examples 13 and 14

Antireflection films were manufactured in the same manner as in Example 3 in all aspects other than that the low-refractive-index layer was formed over the surface of the hard coat layer without the high-refractive-index layer being formed.

### Comparative Example 1

An antireflection film was manufactured in the same manner as in Example 3 in all aspects other than that the low-refractive-index layer forming composition was prepared without blending in the inorganic oxide particles, and the low-refractive-index layer was formed over the surface of the hard coat layer without the high-refractive-index layer being formed.

### Comparative Examples 2 and 3

Antireflection films were manufactured in the same manner as in Example 3 in all aspects other than that the inorganic oxide particles were changed in preparation of the low-refractive-index layer forming composition.

### Comparative Example 4

An antireflection film was manufactured in the same manner as in Example 3 in all aspects other than that the blending ratio of the inorganic oxide particles was changed in preparation of the low-refractive-index layer forming composition.

### Comparative Example 5

An antireflection film was manufactured in the same manner as in Example 3 in all aspects other than that the blending ratio of the hollow silica particles was changed in preparation of the low-refractive-index layer forming composition.

### Comparative Example 6

An antireflection film was manufactured in the same manner as in Example 3 in all aspects other than that the low-refractive-index layer forming composition was prepared without blending in the hollow silica particles.

### Comparative Example 7

An antireflection film was manufactured in the same manner as in Example 3 in all aspects other than that the low-refractive-index layer forming composition was prepared without blending in the fluorine-containing compound.

### Examples 15 to 17

Antireflection films were manufactured in the same manner as in Example 3 in all aspects other than that an antistatic layer was formed over the surface of the substrate film before the hard coat layer was formed.

### Preparation of antistatic layer forming composition

An antistatic layer forming composition was prepared by adding 0.076 g of a curing agent ARACOAT CL910 (manufactured by ARAKAWA CHEMICAL INDUSTRIES, LTD., multifunctional aziridine compound, solid content concentration: 10 mass%) to 2.0 g of a conductive polymer composition ARACOAT AS601D (manufactured by ARAKAWA CHEMICAL INDUSTRIES, LTD., polyethylenedioxythiophene/polystyrene sulfonate (PEDOT/PSS): 0.4 mass%, acrylic resin: 3.0 mass%, solvent (water: 90.8 mass%, isopropyl alcohol: 5.8 mass%, solid content concentration: 3.5 mass%)), and adjusting the solid content concentration to 3.47 mass% using 0.16 g of isopropyl alcohol.

### Formation of antistatic layer

An antistatic layer was formed with a thickness shown in Table by applying the antistatic layer forming composition to the substrate film (polyethylene terephthalate film "Lumirror U403" manufactured by Toray Industries, Inc., thickness: 50 pm) using a wire bar, and drying the composition at 120°C for 30 seconds.

With respect to each of the manufactured antireflection films, the thickness of each layer, haze (Hz) of the entire antireflection film, the total light transmittance (Tt), the arithmetic average roughness (Sa) of the surface of the low-refractive-index layer, and the luminous reflectance were measured. Also, with respect to each of the manufactured antireflection films, scratch resistance and an antifouling property were evaluated. As for the antireflection films including the antistatic layer, surface resistivity of the low-refractive-index layer was measured.

### Layer thickness

Thicknesses of the hard coat layer, the low-refractive-index layer, and the high-refractive-index layer were measured through spectral interferometry using "Filmetrics F20 film thickness measurement system" manufactured by Filmetrics Japan, Inc.

### Haze (Hz) and total light transmittance (Tt)

The haze (Hz) and the total light transmittance (Tt) of the entire antireflection film were measured in accordance with JIS-K7136 using "Haze Meter NDH7000" manufactured by NIPPON DENSHOKU INDUSTRIES CO., LTD.

### Arithmetic average roughness Sa

The arithmetic average roughness Sa of the surface of the low-refractive-index layer was measured using "contactless surface and layer cross-sectional shape measurement system VertScan2.0 (model: R5300GL-L-A100-AC)" manufactured by Mitsubishi Chemical Systems, Inc.

### Luminous reflectance

The rear surface (surface of the substrate film opposite to the surface thereof covered with the low-refractive-index layer) of the manufactured antireflection film was roughened using #400 sandpaper and painted with a black paint, the 5° regular reflectance of the surface of the low-refractive-index layer was measured using an ultraviolet visible near infrared spectrophotometer ("UV-3600" manufactured by SHIMADZU CORPORATION), and the luminous reflectance was calculated by multiplying the measured value by a spectral luminous efficiency value.

### Steel wool test 1

In steel wool test 1, steel wool #0000 (manufactured by Nippon Steel Wool Co., Ltd.) fixed to a flat surface friction block having a diameter of 10 mm was placed on the surface of the low-refractive-index layer of the antireflection film and moved back and forth using a flat surface abrasion tester ("DAS-400" manufactured by Daiei Kagaku Seisakusho Co., Ltd.). The stroke length of a test table was set to 50 mm, the reciprocating speed of the test table was set to 60 times/minute, and a load of 2.2 kg/cm² was applied during reciprocation. A sample was visually observed at every 10 times of reciprocation up to 50 times, and at every 50 times of reciprocation after the 50^{th} reciprocation, and the maximum number of times of reciprocation when a scratch with a length of 10 mm or more was not observed was taken to be an evaluation value of scratch resistance 1.

### Steel wool test 2

In steel wool test 2, steel wool #0000 (manufactured by Nippon Steel Wool Co., Ltd.) fixed to a friction block having a size of 20 mm × 20 mm was placed on the surface of the low-refractive-index layer of the antireflection film and moved back and forth using a color fastness rubbing tester ("AB-301 COLOR FASTNESS RUBBING TESTER" manufactured by TESTER SANGYO CO,. LTD.). The stroke length of a test table was set to 120 mm, the reciprocating speed of the test table was set to 60 times/minute, and a load of 500 g/4cm² was applied during reciprocation. A sample was visually observed after the 100^{th} reciprocation, the 250^{th} reciprocation, and at every 250 times of reciprocation after the 250^{th} reciprocation, and the maximum number of times of reciprocation when a scratch with a length of 10 mm or more was not observed was taken to be an evaluation value of scratch resistance 2.

### Antifouling property

A commercially available synthetic fingerprint liquid (manufactured by ISEKYU CO., LTD., synthetic sweat A method (perspiration tester method)) was put on a finger and applied to the finger, and then the finger was pressed against the surface of the low-refractive-index layer of the antireflection film to attach a fingerprint. Next, the antireflection film was placed on a sheet of black paper, and the fingerprint attached to the surface of the low-refractive-index layer was wiped off using a polyester wiper (ASPURE Super Wiper (Econo) manufactured by AS ONE CORPORATION) while the antireflection film was visually observed. The antifouling property was evaluated as "good" if the fingerprint could be wiped off such that the synthetic fingerprint liquid could not be seen by the 10^{th} reciprocation, evaluated as "fair" if the fingerprint could be wiped off by the 20^{th} reciprocation, and evaluated as "poor" if the fingerprint could not be wiped off even when the wiper was reciprocated 20 times or more.

### Surface resistivity

Surface resistivity (×10¹⁰ Ω/□) of the low-refractive-index layer was measured using "resistivity meter Hiresta UPMCP-HT450" manufactured by Mitsubishi Chemical Analytech Co., Ltd.

**Table 1**

| | | | Examples | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Layer structure | | | | | | | | | | | | | | | | |
| | Substrate film | Material | PI | PET1 | PET2 | PET2 | PET2 | PET2 | PET2 | PET2 | PET2 | PET2 | PET2 | PET2 | PET2 | PET2 |
| | | Thickness [pm] | 50 | 80 | 50 | 50 | 50 | 50 | 50 | 50 | 50 | 50 | 50 | 50 | 50 | 50 |
| | Hard coat layer | Thickness [pm] | 5 | 5 | 5 | 5 | 5 | 5 | 5 | 5 | 5 | 5 | 5 | 5 | 5 | 5 |
| | High-refractive-index layer | Thickness [nm] | 100 | 100 | 100 | 100 | 100 | 100 | 100 | 100 | 100 | 100 | 100 | 100 | | |
| | Low-refractive-index layer | Thickness [nm] | 100 | 100 | 100 | 100 | 100 | 100 | 100 | 100 | 100 | 100 | 100 | 80 | 100 | 100 |

| Composition of low-refractive-index layer (mass%) | | | | | | | | | | | | | | | | |
|---|---|---|---|---|---|---|---|---|---|---|---|---|---|---|---|---|
| | Binder resin | MT3041 | 47.0 | 47.0 | 47.0 | 42.0 | 57.0 | 77.0 | 45.0 | 44.0 | 38.0 | 46.0 | 38.0 | 45.0 | 42.0 | 47.0 |
| | | TPGDA | 4.2 | 4.2 | 4.2 | 4.2 | 4.2 | 4.2 | 4.2 | 4.2 | 4.2 | 1.4 | 7.0 | | 4.2 | 4.2 |
| | Inorganic oxide particles | Alumina 1 (180nm) | 1.8 | 1.8 | 1.8 | 1.8 | 1.8 | 1.8 | 1.8 | 1.8 | 1.8 | 0.6 | 3.0 | | 1.8 | 1.8 |
| | | Alumina 2 (60nm) | | | | | | | | | | | | | | |
| | | Solid silica (100nm) | - | - | - | - | - | - | - | - | - | - | - | 3.0 | - | - |
| | Hollow silica particles (60nm) | | 40.0 | 40.0 | 40.0 | 45.0 | 30.0 | 10.0 | 45.0 | 45.0 | 45.0 | 45.0 | 45.0 | 45.0 | 45.0 | 40.0 |
| | Fluorine-containing compound | | 4.0 | 4.0 | 4.0 | 4.0 | 4.0 | 4.0 | 1.0 | 2.0 | 8.0 | 4.0 | 4.0 | 4.0 | 4.0 | 4.0 |
| | Photopolymerization initiator | | 3.0 | 3.0 | 3.0 | 3.0 | 3.0 | 3.0 | 3.0 | 3.0 | 3.0 | 3.0 | 3.0 | 3.0 | 3.0 | 3.0 |
| | Total particle content (mass%) | | 41.8 | 41.8 | 41.8 | 46.8 | 31.8 | 11.8 | 46.8 | 46.8 | 46.8 | 45.6 | 48.0 | 48.0 | 46.8 | 41.8 |

| Evaluation | | | | | | | | | | | | | | | | |
|---|---|---|---|---|---|---|---|---|---|---|---|---|---|---|---|---|
| | Steel wool test 1 (2.2kg/cm²) | | 100 | 100 | 100 | 100 | 100 | 100 | 100 | 100 | 100 | 100 | 100 | 100 | 100 | 100 |
| | Steel wool test 2 (500g/4cm²) | | 1000 | 1000 | 1000 | 1000 | 1250 | 2000 | 1000 | 1000 | 1000 | 1000 | 1000 | 1000 | 1000 | 1000 |
| | Luminous reflectance [%] | | 0.73 | 0.73 | 0.62 | 0.73 | 0.98 | 1.87 | 0.62 | 0.62 | 0.62 | 0.62 | 0.62 | 0.83 | 1.39 | 1.70 |
| | Antifouling property | | Good | Good | Good | Good | Good | Good | Fair | Good | Good | Good | Good | Good | Good | Good |
| | Hz [%] | | 0.7 | 0.8 | 0.8 | 0.8 | 0.8 | 0.8 | 0.8 | 0.8 | 0.8 | 0.6 | 0.9 | 0.8 | 0.8 | 0.8 |
| | Tt [%] | | 93.5 | 93.8 | 94.0 | 93.8 | 93.3 | 92.3 | 94.0 | 94.0 | 94.0 | 94.0 | 94.0 | 93.8 | 92.8 | 92.0 |
| | Sa [nm] | | 8 | 8 | 8 | 8 | 7 | 6 | 8 | 8 | 8 | 6 | 10 | 9 | 8 | 8 |

**Table 2**

| | | | Comparative Examples | | | | | | |
|---|---|---|---|---|---|---|---|---|---|
| | | | 1 | 2 | 3 | 4 | 5 | 6 | 7 |
| Layer structure | | | | | | | | | |
| | Substrate film | Material | PET2 | PET2 | PET2 | PET2 | PET2 | PET2 | PET2 |
| | | Thickness [pm] | 50 | 50 | 50 | 50 | 50 | 50 | 50 |
| | Hard coat layer | Thickness [pm] | 5 | 5 | 5 | 5 | 5 | 5 | 5 |
| | High-refractive-index layer | Thickness [nm] | - | 100 | 100 | 100 | 100 | 100 | 100 |
| | Low-refractive-index layer | Thickness [nm] | 100 | 100 | 100 | 100 | 100 | 100 | 100 |

| Composition of low-refractive-index layer (mass%) | | | | | | | | | |
|---|---|---|---|---|---|---|---|---|---|
| | Binder resin | MT3041 | 53.0 | 40.0 | 40.0 | 34.0 | 27.0 | 87.0 | 46.0 |
| | | TPGDA | - | - | - | 9.8 | 4.2 | 4.2 | 4.2 |
| | Inorganic oxide particles | Alumina 1 (180nm) | - | - | - | 4.2 | 1.8 | 1.8 | 1.8 |
| | | Alumina 2 (60nm) | - | 3.0 | - | - | - | - | - |
| | | Solid silica (100nm) | - | - | 3.0 | - | - | - | - |
| | Hollow silica particles (60nm) | | 40.0 | 50.0 | 50.0 | 45.0 | 60.0 | - | 45.0 |
| | Fluorine-containing compound | | 4.0 | 4.0 | 4.0 | 4.0 | 4.0 | 4.0 | |
| | Photopolymerization initiator | | 3.0 | 3.0 | 3.0 | 3.0 | 3.0 | 3.0 | 3.0 |
| | Total particle content (mass%) | | 40.0 | 53.0 | 53.0 | 49.2 | 61.8 | 1.8 | 46.8 |

| Evaluation | | | | | | | | | |
|---|---|---|---|---|---|---|---|---|---|
| | Steel wool test 1 (2.2kg/cm²) | | <10 | 50 | 50 | 50 | 50 | 100 | 50 |
| | Steel wool test 2 (500g/4cm²) | | <100 | 750 | 750 | 750 | 750 | 2250 | 750 |
| | Luminous reflectance [%] | | 1.68 | 0.62 | 0.62 | 0.62 | 0.41 | 2.12 | 0.62 |
| | Antifouling property | | Good | Good | Good | Good | Good | Good | Poor |
| | Hz [%] | | 0.6 | 0.6 | 0.6 | 1.1 | 0.8 | 0.8 | 0.8 |
| | Tt [%] | | 92.3 | 94.0 | 94.0 | 94.0 | 94.4 | 91.8 | 94.0 |
| | Sa [nm] | | 5 | 5 | 6 | 13 | 8 | 6 | 8 |

**Table 3**

| | | | Examples | | |
|---|---|---|---|---|---|
| | | | 15 | 16 | 17 |
| Layer structure | | | | | |
| | Substrate film | Material | PET2 | PET2 | PET2 |
| | | Thickness [µm] | 50 | 50 | 50 |
| | Antistatic layer | Thickness [µm] | 50 | 100 | 150 |
| | Hard coat layer | Thickness [nm] | 5 | 5 | 5 |
| | High-refractive-index layer | Thickness [nm] | 100 | 100 | 100 |
| | Low-refractive-index layer | Thickness [nm] | 100 | 100 | 100 |

| Composition of low-refractive-index layer (mass%) | | | | | |
|---|---|---|---|---|---|
| | Binder resin | MT3041 | 47.0 | 47.0 | 47.0 |
| | | TPGDA | 4.2 | 4.2 | 4.2 |
| | Inorganic oxide particles | Alumina 1 (180nm) | 1.8 | 1.8 | 1.8 |
| | | Alumina 2 (60nm) | - | - | - |
| | | Solid silica (100nm) | - | - | - |
| | Hollow silica particles (60nm) | | 40 | 40 | 40 |
| | Fluorine-containing compound | | 4.0 | 4.0 | 4.0 |
| | Photopolymerization initiator | | 3.0 | 3.0 | 3.0 |
| | Total particle content (mass%) | | 41.8 | 41.8 | 41.8 |

| Evaluation | | | | | |
|---|---|---|---|---|---|
| | Steel wool test 1 (2.2kg/cm²) | | 100 | 100 | 100 |
| | Steel wool test 2 (500g/4cm²) | | 1000 | 1000 | 1000 |
| | Luminous reflectance [%] | | 0.62 | 0.62 | 0.62 |
| | Antifouling property | | Good | Good | Good |
| | Hz [%] | | 0.8 | 0.8 | 0.8 |
| | Tt [%] | | 93.7 | 93 | 92.3 |
| | Sa [nm] | | 8 | 8 | 8 |
| | Surface resistivity [*10¹⁰Ω/□] | | 8.8 | 4.1 | 0.11 |

In Comparative Example 1, the low-refractive-index layer did not contain inorganic oxide particles. In Comparative Examples 2 and 3, the low-refractive-index layer contained inorganic oxide particles, but the average particle size r of the inorganic oxide particles was no greater than the average thickness d of the low-refractive-index layer, and surface irregularities were not sufficiently formed by the inorganic oxide particles. Therefore, in Comparative Examples 1 to 3, the evaluation values of steel wool test 1 were less than 100, and the evaluation values of steel wool test 2 were less than 1000, and scratch resistance was insufficient. In Comparative Example 4, the amount of inorganic oxide particles contained in the low-refractive-index layer was large and was greater than 4.0 mass% relative to 100 mass% of the solid content of the low-refractive-index layer. Therefore, in Comparative Example 4, scratch resistance was insufficient due to the inorganic oxide particles falling off. In Comparative Example 5, the amount of hollow silica particles contained in the low-refractive-index layer was large, and the total amount of the inorganic oxide particles and the hollow silica particles was 50 mass% or more relative to 100 mass% of the solid content of the low-refractive-index layer. Therefore, in Comparative Example 5, scratch resistance was insufficient. In Comparative Example 6, the low-refractive-index layer did not contain hollow silica particles. Therefore, in Comparative Example 6, the luminous reflectance was as high as 2.0% or more, and the antireflection property was poor. In Comparative Example 7, the low-refractive-index layer did not contain a fluorine-containing compound. Therefore, in Comparative Example 7, the antifouling property was poor. Also, scratch resistance was insufficient.

Compared to Comparative Examples, in Examples, the low-refractive-index layer contained inorganic oxide particles, hollow silica particles, a fluorine-containing compound, and a binder resin. The amount of the inorganic oxide particles contained in the low-refractive-index layer was at least 0.1 mass% and no greater than 4.0 mass% relative to 100 mass% of the solid content of the low-refractive-index layer. The total amount of the inorganic oxide particles and the hollow silica particles contained in the low-refractive-index layer was at least 10 mass% and no greater than 50 mass% relative to 100 mass% of the solid content of the low-refractive-index layer. A difference (r-d) between the average particle size r of the inorganic oxide particles and the average thickness d of the low-refractive-index layer was at least 10 nm and no greater than 300 nm. It can be found that therefore, the antireflection films had a high antireflection property, excellent scratch resistance, and a favorable antifouling property.

### List of Reference Numerals

- 10, 20, 30, 40: Antireflection film
- 12: Substrate film
- 14: Low-refractive-index layer
- 16: Hard coat layer
- 17: High-refractive-index layer
- 18: Inorganic oxide particles
- 22: Hollow silica particles
- 24: Transparent adhesive layer
- 26: Release film
- 28: Adhesive layer
- 32: Protective film

## Claims

1. An antireflection film (10, 20, 30, 40) comprising:
a substrate film (12);
a hard coat layer (16) that is formed over a surface of the substrate film (12); and
a low-refractive-index layer (14) that is formed over a surface of the hard coat layer (16),
wherein the low-refractive-index layer (14) contains:
inorganic oxide particles (18) that form raised portions in a surface of the low-refractive-index layer (14);
hollow silica particles (22) that have an average particle size smaller than an average thickness of the low-refractive-index layer (14);
a fluorine-containing compound; and
a binder resin,
the amount of the inorganic oxide particles (18) contained in the low-refractive-index layer (14) is at least 0.1 mass% and no greater than 4.0 mass% relative to 100 mass% of a solid content of the low-refractive-index layer (14),
the total amount of the inorganic oxide particles (18) and the hollow silica particles (22) contained in the low-refractive-index layer (14) is at least 10 mass% and no greater than 50 mass% relative to 100 mass% of the solid content of the low-refractive-index layer (14),
a difference (r-d) between an average particle size r of the inorganic oxide particles (18) and the average thickness d of the low-refractive-index layer (14) is at least 10 nm and no greater than 300 nm, and
the amount of the fluorine-containing compound contained in the low-refractive-index layer (14) is at least 1.0 mass% and no greater than 15.0 mass% relative to 100 mass% of the solid content of the low-refractive-index layer (14),
**characterized in that** the binder resin contains at least one dimer selected from the group consisting of dimers of pentaerythritol tri(meth)acrylate, dipentaerythritol penta(meth)acrylate, and dipentaerythritol hexa(meth)acrylate, and
the amount of the at least one dimer is within a range of 25 to 50 mass% of a total solid content of multifunctional (meth)acrylates contained in the binder resin.

2. The antireflection film (10, 20, 30, 40) according to claim 1,
wherein the inorganic oxide particles (18) are solid particles.

3. The antireflection film (10, 20, 30, 40) according to claim 1 or 2,
wherein the fluorine-containing compound comprises a (meth)acrylate that has a perfluoroalkyl group.

4. The antireflection film (10, 20, 30, 40) according to any one of claims 1 to 3,
wherein the fluorine-containing compound and the binder resin have reactive groups that are reactive to ultraviolet rays.

5. The antireflection film (10, 20, 30, 40) according to any one of claims 1 to 4, further comprising a protective film (32) that is provided over a surface of the low-refractive-index layer (14) with an adhesive layer (28) arranged therebetween.

6. The antireflection film (10, 20, 30, 40) according to any one of claims 1 to 5, further comprising a transparent adhesive layer (28) that is provided on a surface of the substrate film (12) opposite to the surface thereof covered with the low-refractive-index layer (14).

## Patentansprüche

1. Antireflexionsfilm (10, 20, 30, 40), aufweisend:
einen Substratfilm (12);
eine Hartbeschichtungsschicht (16), die über einer Oberfläche des Substratfilms (12) ausgebildet ist; und
eine Schicht (14) mit niedrigem Brechungsindex, die über einer Oberfläche der Hartbeschichtungsschicht (16) ausgebildet ist,
wobei die Schicht (14) mit niedrigem Brechungsindex Folgendes enthält:
anorganische Oxidpartikel (18), die erhabene Abschnitte in einer Oberfläche der Schicht (14) mit niedrigem Brechungsindex bilden;
hohle Siliciumdioxidpartikel (22), die eine durchschnittliche Partikelgröße aufweisen, die kleiner als eine durchschnittliche Dicke der Schicht (14) mit niedrigem Brechungsindex ist;
eine fluorhaltige Verbindung; und
ein Bindemittelharz,
wobei die Menge der anorganischen Oxidpartikel (18), die in der Schicht (14) mit niedrigem Brechungsindex enthalten sind, mindestens 0,1 Massen-% und nicht mehr als 4,0 Massen-%, bezogen auf 100 Massen-% eines Feststoffgehalts der Schicht (14) mit niedrigem Brechungsindex, beträgt,
wobei die Gesamtmenge der anorganischen Oxidpartikel (18) und der hohlen Siliciumdioxidpartikel (22), die in der Schicht (14) mit niedrigem Brechungsindex enthalten sind, mindestens 10 Massen-% und nicht mehr als 50 Massen-%, bezogen auf 100 Massen-% des Feststoffgehalts der Schicht (14) mit niedrigem Brechungsindex, beträgt,
wobei eine Differenz (r-d) zwischen einer durchschnittlichen Partikelgröße r der anorganischen Oxidpartikel (18) und der durchschnittlichen Dicke d der Schicht (14) mit niedrigem Brechungsindex mindestens 10 nm und nicht mehr als 300 nm beträgt, und
wobei die Menge der fluorhaltigen Verbindung, die in der Schicht (14) mit niedrigem Brechungsindex enthalten ist, mindestens 1,0 Massen-% und nicht mehr als 15,0 Massen-%, bezogen auf 100 Massen-% des Feststoffgehalts der Schicht (14) mit niedrigem Brechungsindex, beträgt,
**dadurch gekennzeichnet, dass** das Bindemittelharz mindestens ein Dimer enthält, das aus der Gruppe ausgewählt ist, die aus Dimeren von Pentaerythritoltri(meth)acrylat, Dipentaerythritolpenta(meth)acrylat und Dipentaerythritolhexa(meth)acrylat besteht, und
wobei die Menge des mindestens einen Dimers innerhalb eines Bereichs von 25 bis 50 Massen-% eines Gesamtfeststoffgehalts von multifunktionellen (Meth)acrylaten, die in dem Bindemittelharz enthalten sind, liegt.

2. Antireflexionsfilm (10, 20, 30, 40) nach Anspruch 1,
wobei die anorganischen Oxidpartikel (18) Feststoffpartikel sind.

3. Antireflexionsfilm (10, 20, 30, 40) nach Anspruch 1 oder 2,
wobei die fluorhaltige Verbindung ein (Meth)acrylat aufweist, das eine Perfluoralkylgruppe aufweist.

4. Antireflexionsfilm (10, 20, 30, 40) nach einem der Ansprüche 1 bis 3,
wobei die fluorhaltige Verbindung und das Bindemittelharz reaktive Gruppen aufweisen, die gegenüber ultravioletten Strahlen reaktiv sind.

5. Antireflexionsfilm (10, 20, 30, 40) nach einem der Ansprüche 1 bis 4, ferner aufweisend einen Schutzfilm (32), der über einer Oberfläche der Schicht (14) mit niedrigem Brechungsindex mit einer dazwischen angeordneten Klebeschicht (28) versehen ist.

6. Antireflexionsfilm (10, 20, 30, 40) nach einem der Ansprüche 1 bis 5, ferner aufweisend eine transparente Klebeschicht (28), die auf einer Oberfläche des Substratfilms (12) gegenüber derjenigen Oberfläche, die mit der Schicht (14) mit niedrigem Brechungsindex bedeckt ist, vorgesehen ist.

## Revendications

1. Film antireflet (10, 20, 30, 40) comprenant :
un film de substrat (12) ;
une couche de revêtement dur (16) qui est formée sur une surface du film de substrat (12) ; et
une couche à faible indice de réfraction (14) qui est formée sur une surface de la couche de revêtement dur (16),
dans lequel la couche à faible indice de réfraction (14) contient :
des particules d'oxyde inorganique (18) qui forment des parties surélevées dans une surface de la couche à faible indice de réfraction (14) ;
des particules de silice creuses (22) qui ont une taille de particule moyenne inférieure à une épaisseur moyenne de la couche à faible indice de réfraction (14) ;
un composé contenant du fluor ; et
une résine liante,
la quantité des particules d'oxyde inorganique (18) contenues dans la couche à faible indice de réfraction (14) est d'au moins 0,1 % en masse et d'au plus 4,0 % en masse par rapport à 100 % en masse d'une teneur en solides de la couche à faible indice de réfraction (14),
la quantité totale des particules d'oxyde inorganique (18) et des particules de silice creuses (22) contenues dans la couche à faible indice de réfraction (14) est d'au moins 10 % en masse et d'au plus 50 % en masse par rapport à 100 % en masse de la teneur en solides de la couche à faible indice de réfraction (14),
une différence (r-d) entre une taille de particule moyenne r des particules d'oxyde inorganique (18) et l'épaisseur moyenne d de la couche à faible indice de réfraction (14) est d'au moins 10 nm et d'au plus 300 nm, et
la quantité du composé contenant du fluor contenu dans la couche à faible indice de réfraction (14) est d'au moins 1,0 % en masse et d'au plus 15,0 % en masse par rapport à 100 % en masse de la teneur en solides de la couche à faible indice de réfraction (14),
**caractérisé en ce que** la résine liante contient au moins un dimère choisi dans le groupe constitué de dimères de tri(méth)acrylate de pentaérythritol, de penta(méth)acrylate de dipentaérythritol et d'hexa(méth)acrylate de dipentaérythritol, et
la quantité de l'au moins un dimère est dans une plage de 25 à 50 % en masse d'une teneur totale en solides de (méth)acrylates multifonctionnels contenus dans la résine liante.

2. Film antireflet (10, 20, 30, 40) selon la revendication 1,
dans lequel les particules d'oxyde inorganique (18) sont des particules solides.

3. Film antireflet (10, 20, 30, 40) selon la revendication 1 ou 2,
dans lequel le composé contenant du fluor comprend un (méth)acrylate qui a un groupe perfluoroalkyle.

4. Film antireflet (10, 20, 30, 40) selon l'une quelconque des revendications 1 à 3,
dans lequel le composé contenant du fluor et la résine liante ont des groupes réactifs qui sont réactifs aux rayons ultraviolets.

5. Film antireflet (10, 20, 30, 40) selon l'une quelconque des revendications 1 à 4, comprenant en outre un film protecteur (32) qui est prévu sur une surface de la couche à faible indice de réfraction (14) avec une couche adhésive (28) agencée entre eux.

6. Film antireflet (10, 20, 30, 40) selon l'une quelconque des revendications 1 à 5, comprenant en outre une couche adhésive transparente (28) qui est prévue sur une surface du film de substrat (12) opposée à la surface de celui-ci recouverte avec la couche à faible indice de réfraction (14).
